# EUROPÄISCHE PATENTANMELDUNG

(11) **EP 4 653 173 A1**
(43) Veröffentlichungstag der Anmeldung: **26.11.2025**
(21) Anmeldenummer: 24177527.9
(22) Anmeldetag: 23.05.2024
(51) Int. Cl.: B29C 45/27

(54) **VORRICHTUNG ZUR SCHMELZROTATION IN EINER VERTEILEREINHEIT EINES SPRITZGIESSWERKZEUGES**

(71) Anmelder: Witosa GmbH, 35066 Frankenberg (DE)
(72) Erfinder: GLITTENBERG, Torsten, 35066 Frankenberg (DE); HALLENBERGER, Martin, 35088 Frohnhausen (DE)
(74) Vertreter: Walther Bayer Faber Patentanwälte PartGmbB

(57) **Zusammenfassung**

Gegenstand der Erfindung ist eine Vorrichtung (1) zur Rotation einer plastifizierten Schmelze in einer Verteilereinheit (100) eines Spritzgießwerkzeuges, wobei in der Verteilereinheit (100) wenigstens ein Schmelzkanal (10) zur Führung der plastifizierten Schmelze ausgebildet ist. Erfindungsgemäß ist ein Rotationsmittel (11) im Schmelzkanal (10) eingerichtet, das zwei Teilkanäle (11a, 11b) aufweist, die sich getrennt voneinander zwischen einer Einlaufseite (E) und einer Auslaufseite (A) des Rotationsmittels (11) erstrecken, wobei die beiden Teilkanäle (11a, 11b) beginnend an der Einlaufseite (E) in einer Trennrichtung mit zunehmendem Abstand zueinander auseinanderlaufen und in der Auslaufseite (A) in einer Verbindungsrichtung unter einem Verdrehwinkel relativ zur Trennrichtung wieder aufeinander zu und zusammenlaufen. Die Erfindung richtet sich zudem auf eine Verteilereinheit (100) eines Spritzgießwerkzeuges mit wenigstens einer Vorrichtung (1) zur Rotation einer plastifizierten Schmelze im wenigstens einen Schmelzkanal (10) zur Führung der plastifizierten Schmelze.

## Beschreibung

Die Erfindung betrifft eine Vorrichtung zur Rotation einer plastifizierten Schmelze in einer Verteilereinheit eines Spritzgießwerkzeuges, wobei in der Verteilereinheit wenigstens ein Schmelzkanal zur Führung der plastifizierten Schmelze ausgebildet ist. Die Erfindung richtet sich zudem auf eine solche Verteilereinheit eines Spritzgießwerkzeuges mit wenigstens einer Vorrichtung zur Rotation einer plastifizierten Schmelze in dem wenigstens einen Schmerzkanal zur Führung der plastifizierten Schmelze.

### STAND DER TECHNIK

Beim Spritzgießen mittels Spritzgießwerkzeugen werden in der Regel geschmolzene synthetische Kunststoffe, auch plastifizierte Schmelzen genannt, durch ein Heizkanalverteilersystem geleitet, das in einer Verteilereinheit über mehrere Schmelzkanäle gebildet ist. Diese Schmelzkanäle weisen Verzweigungen auf, um über mehrere Heißkanaldüsen mehrere Kavitäten zu versorgen, sodass die Schmelzkanäle in Heißkanaldüsen münden, und wobei die Verteilereinheit in der Regel eine Verteilerplatte bildet, auf der die Heißkanaldüsen senkrecht abragend montiert sind. Die Verzweigungen in den Schmelzkanälen sind in der Regel T-förmig ausgebildet.

Derartige Verteilereinheiten mit einem Verzweigungssystem von Schmerzkanälen werden zumeist symmetrisch gestaltet, sodass möglichst alle Heißkanaldüsen und entsprechend zugeordnete Kavitäten im Spritzgießwerkzeug gleichzeitig und mit einer gleichen Menge der plastifizierten Schmelze versorgt werden. Nur so kann sichergestellt werden, dass alle gleichzeitig gespritzten Bauteile gleich zueinander ausgebildet werden. Um dies zu gewährleisten, werden die durch die Verteilereinheit laufenden Kanäle üblicherweise symmetrisch ausgebildet, sodass für jede Heißkanaldüse der Schmelzkanal eine gleich lange Strecke für die Schmelze bildet. Die Abschnitte der Schmelzkanäle werden in Bezug auf ihre Länge und ihre Durchmesser dabei so gestaltet, dass bei einer ideal strömenden Masse gleiche Volumen zu den jeweiligen Heißkanaldüsen gefördert werden können.

Bei sog. Newtonschen Flüssigkeiten, die durch einen kreisförmigen Schmelzkanal strömen, stellt sich in der Regel eine parabelförmige Verteilung der Strömungsgeschwindigkeit ein, wobei in der geometrischen Mitte des in der Regel kreisrunden Schmelzkanals die Strömungsgeschwindigkeit am höchsten ist und das Strömungsprofil zum Rand hin parabelförmig abnimmt. Folglich ist bei einem solchem Strömungsvorgang die Scherung zwischen den einzelnen Bereichen beginnend von der Mitte des Strömungskanals bis zur Grenzschicht, also an der Innenwand des Strömungskanals, annährend gleich groß.

Bei sog. Nicht-Newtonschen Flüssigkeiten wie etwa eine plastifizierte Schmelze stellt sich hingegen keine parabelförmige Geschwindigkeitsverteilung ein. Die Viskosität einer plastifizierten Schmelze ist dabei stärker von der Scherung abhängig, die nahe der Wandung des kreisförmigen Schmelzkanals am größten ist. Je geringer die Viskosität ist, umso größer ist die Scherung. Dies hat zur Folge, dass die Viskosität angrenzend an die Innenwandung des Schmelzkanals am geringsten ist. Die Geschwindigkeitsverteilung der plastifizierten Schmelze beim Hindurchströmen durch den Schmelzkanal ergibt folglich eine stark abgeflachte Parabel. Bei vereinfachter näherungsweiser Betrachtung bedeutet dies, dass im zentralen Bereich des Kanals die relativ zäh strömende plastifizierte Schmelze wie ein langer Pfropfen durch den Schmelzkanal gedrückt wird, und es bildet sich eine von der radialen Lage annährend unabhängige Strömungsgeschwindigkeit aus, während in peripheren Bereichen die Schmelze in Folge der stärkeren Scherung flüssiger ist und folglich langsamer fließt.

Als ein Ergebnis dieses Verhaltens der plastifizierten Schmelze ist daher zu beobachten, dass sich die Versorgung der Heißkanaldüsen aus dem ansonsten geometrisch symmetrischen Netz des Schmelzkanals asymmetrisch darstellt, und es können im Ergebnis unterschiedliche Spritzgussergebnisse mit einem Spritzgussvorgang die Folge sein. Der Grund liegt darin, dass insbesondere bei den T-förmigen Verzweigungen über dem Querschnitt des Schmelzkanals verteilt die Schmelze nicht mehr eine rotationssymmetrische Viskositätsverteilung aufweist, sondern eine asymmetrische Verteilung. Folgt eine weitere T-Verzweigung, so ergibt sich als Folge der zuvor bereits asymmetrischen Verteilung der Viskosität eine Aufteilung der Schmelze in einen Teilkanal mit einer höheren und in einen weiteren Teilkanal mit einer geringeren Viskosität.

Um diesem Problem zu begegnen, bedient sich der Stand der Technik bestimmten Formen der Schmelzrotation, und es sind Vorrichtungen zur Rotation einer plastifizierten Schmelze in einer Verteilereinheit eines Spritzgießwerkzeuges bekannt, die zu einer zumindest besseren Gleichverteilung der Schmelze an die mehreren Heißkanaldüsen führen.

Beispielsweise offenbart die DE 698 27 834 T2 eine Vorrichtung zur Rotation einer plastifizierten Schmelze über eine Mehrfachumlenkung der Schmelze im Schmelzkanal, wobei die geometrische Ausgestaltung der Umlenkung eine 2-teilige Verteilerplatte in einer planaren Teilungsebene erfordert, sodass der Schmelzkanal in den Teil-Verteilerplatten als Rinnen ausgebildet wird. Dadurch ergibt sich eine aufwendige Herstellung der Verteilereinheit und die Teil-Verteilerplatten müssen exakt aufeinander passen.

Die DE 10 2009 014 113 A1 offenbart eine weitere Vorrichtung zur Rotation einer plastifizierten Schmelze in einer Verteilereinheit eines Spritzgießwerkzeuges, wobei die Vorrichtung ein Einsatzelement aufweist, das als Stopfen in einem Blindkanal eingebracht wird, der zwar nicht mit plastifizierter Schmelze durchströmt wird, der jedoch notwendig ist, um im Innenbereich der Verteilerplatte das System aus Schmelzkanälen überhaupt herzustellen, also als Anbohrung dient. Diese Einsatzelemente weisen Wendeelemente auf, die eine Rotation der Schmelze bewirken. Nachteilhafterweise weisen diese Wendeelemente jedoch immer eine die Strömung unmittelbar durchschneidende Anströmkante auf, was nachteilhaft ist, wenn die plastifizierte Schmelze additiviert ist, beispielsweise mit Metallfasern oder Glasfasern. Ferner bilden die Einsatzelemente die T-förmige Verteilerstelle im Kanalsystem, und teilen die Schmelze in zwei Teilströme auf. Dadurch ergibt sich für die T-förmige Verteilerstelle innerhalb des Systems aus den Schmelzkanälen ein erhöhter Strömungswiderstand.

Ein ähnliches Prinzip der Verwendung eines Einsatzelementes zum Einsatz im Schmelzkanal selbst und zur Rotation der Schmelze um die eigentliche Strömungsachse im Schmelzkanal zeigt auch die CH 699 628 B1. Auch diese Elemente zur Rotation der plastifizierten Schmelze ragen unmittelbar in den Strömungskanal hinein und schneiden die strömende Schmelze in zwei Teilströmungen auf. Diese beiden Teilströmungen werden über eine T-Verbindung der Schmelzkanäle anschließend in jeweils separaten Kanälen weitergeleitet.

### OFFENBARUNG DER ERFINDUNG

Die Aufgabe der Erfindung besteht in der Verbesserung einer Vorrichtung zur Rotation einer plastifizierten Schmelze in einer Verteilereinheit eines Spritzgießwerkzeuges, wobei die Vorrichtung möglichst einfach aufgebaut sein soll, gut montierbar sein soll und es soll vermieden werden, dass Teilströmungen erzeugt werden, die durch eine die strömende Masse in zwei Teilströmungen aufschneidende Anströmkante gebildet wird. Dabei ist es ein weiterer Grundgedanke der Erfindung, die Vorrichtung in den freien Verlauf eines Schmelzkanals einrichten zu können, ohne dass die Vorrichtung selbst die Funktion einer T-förmigen Verteilereinrichtung übernimmt.

Diese Aufgabe wird ausgehend von einer Vorrichtung gemäß dem Oberbegriff des Anspruchs 1 sowie ferner ausgehend von einer Verteilereinheit gemäß Anspruch 12 mit den jeweils kennzeichnenden Merkmalen gelöst. Vorteilhafte Weiterbildungen der Erfindung sind in den abhängigen Ansprüchen angegeben.

Die Erfindung schließt die technische Lehre ein, dass ein Rotationsmittel im Schmelzkanal eingerichtet ist, das zwei Teilkanäle aufweist, die sich getrennt voneinander zwischen einer Einlaufseite und einer Auslaufseite des Rotationsmittels erstrecken, wobei die beiden Teilkanäle beginnend an der Einlaufseite in einer Trennrichtung mit zunehmendem Abstand zueinander auseinanderlaufen und in der Auslaufseite in einer Verbindungsrichtung unter einem Verdrehwinkel relativ zur Trennrichtung wieder aufeinander zu und damit zusammenlaufen.

Grundgedanke der Erfindung ist die Aufteilung der strömenden Schmelze in zwei Teilkanäle, die ähnlich einer T-förmigen Aufteilung im Schmelzkanal selbst zwei Teilströme erzeugen, die in einer Trennrichtung auseinanderlaufen. Die Trennrichtung beschreibt dabei eine Erstreckungsrichtung der jeweiligen Strömungsachse der Teilströme in den Teilkanälen, in der die beiden Strömungen jeweils voneinander getrennt und damit auseinanderlaufen. In der Auslaufseite des Rotationsmittels, also zurück in den Strömungskanal, laufen die beiden Teilströmungen in der Verbindungsrichtung wieder aufeinander zu und vereinen sich, wobei die dadurch definierte Verbindungsrichtung im Bereich der Auslaufseite relativ zur Trennrichtung auf der Einlaufseite verdreht ist. Zwischen der die Teilströme erzeugenden Einlaufseite und die Teilströme wieder verbindenden Auslaufseite erstrecken sich die beiden Teilkanäle helixartig getrennt und verdreht zueinander, wobei die Teilkanäle Mittelachsen aufweisen, die selbst die Verdrehung ähnlich der Helix-Form aufweisen. Es ergibt sich damit eine Verdrehung des Schmelzprofils nur um die eigene Achse sondern gewissermaßen auf die Seite gelegt, ohne dass eine Anströmkante das Strömungsprofil durchschneidet.

Der Verdrehwinkel kann beispielsweise 70° bis 110°, vorzugsweise 80° bis 100° und besonders bevorzugt 90° betragen. Je nach Anwendung können es auch deutlich weniger oder mehr Winkelgerade sein.

Die Verteilereinheit umfasst eine Verteilerplatte, die insbesondere einteilig ausgeführt ist. In der Verteilerplatte ist der wenigstens eine Schmelzkanal eingebracht, wobei der Schmelzkanal mehrere Abschnitte aufweist und T-Verbindungen umfasst, um ausgehend von einem Anschlussstück eine Anzahl von Heißkanaldüsen zu versorgen. Insofern weist der Schmelzkanal eine Verteilerstruktur auf, die in der Verteilerplatte selbst eingebracht ist. Das Rotationsmittel befindet sich dabei im freien Verlauf eines Schmelzkanals ohne T-Verzweigung, sodass der Schmelzkanal auf der Einlaufseite auf das Rotationsmittel zuläuft und von der Auslaufseite vom Rotationsmittel wieder abläuft. Es können insoweit auch mehrere Rotationsmittel aufeinander folgend in einem Schmelzkanal eingebracht sein.

Die Verteilerplatte kann dabei Teil des Rotationsmittels selbst ein, insofern, als dass beispielsweise die Teilkanäle des Rotationsmittels einen Wandungsabschnitt aufweisen können, der durch die Verteilerplatte gebildet oder verschlossen wird. Insbesondere die Teilkanäle können so ausgestaltet sein, dass diese zur geschlossenen Ausführung von einer Innenwandung einer Aufnahmeöffnung in der Verteilerplatte begrenzt werden.

Insbesondere weist das Rotationsmittel ein Einsatzelement auf, das in einer Aufnahme in der Verteilerplatte eingebracht ist. Das Einsatzelement kann beispielsweise einen Zylinderkörper bilden, und auf der Außenumfangsfläche des Zylinderkörpers können die zwei Teilkanäle beispielsweise als Nuten eingebracht sein. Im Sinne der Erfindung kann das Einsatzelement jedoch auch jede andere geometrische Gestalt aufweisen, die vorzugsweise passgenau in die zugeordnete Aufnahme in der Verteilerplatte eingebracht ist. In diese Aufnahme hinein läuft der Schmelzkanal auf der Einlaufseite auf das Rotationsmittel zu und von der Auslaufseite vom Rotationsmittel wieder weg.

So ist es von besonderem Vorteil, wenn das Einsatzelement in der Aufnahme in der Verteilerplatte eingepasst ist, sodass die Nuten durch die Innenwandung der Aufnahmebohrung in der Verteilerplatte die Teilkanäle bilden. Dadurch ergibt sich eine vorteilhafte Herstellung des Einsatzelementes, wobei die Nuten in der Außenumfangsfläche des zylinderförmigen Einsatzelementes beispielsweise eingefräst werden können. Auch ist es denkbar, dass das Einsatzelement im 3D-Druckverfahren hergestellt wird, beispielsweise aus einem metallischen Werkstoff, und beispielsweise mittels eines selektiven Laserschmelzens (SLM).

Die Einlaufseite und die Auslaufseite des Rotationsmittels im Schmelzkanal sind im Einsatzelement selbst eingebracht, sodass ein Übergang der Teilkanäle aus dem und in den Schmelzkanal unterbrechungsfrei erfolgt, ähnlich einer T-Verbindung, in der auf der Einlaufseite die Teilströmungen auseinanderströmen und auf der Auslaufseite die Teilströmungen wieder zueinander finden, zusammenlaufen und vermengt werden. Die Übergänge von der Einlaufseite und der Auslaufseite in die und aus den Teilkanälen erfolgt dabei ohne Anordnung einer Schneidekante, die in die strömende Schmelze hineinragt und diese durchschneidet. Dadurch ergibt sich kein nennenswert zunehmender Strömungswiderstand und Additive in der Schmelze bauen in der Stirnkante des Trennelementes nicht auf und erzeugen auch keinen abrasiven Verschleiß.

Das Einsatzelement kann in die Aufnahme in der Verteilerplatte eingeschraubt, eingepresst oder mit Haltemitteln haltend eingebracht sein. Zudem kann wenigstens ein Dichtelement vorgesehen werden, über das das Einsatzelement in der Aufnahme in der Verteilerplatte abdichtet wird. Das Einsatzelement kann so in die Aufnahme in der Verteilerplatte eingebracht sein, dass eine geometrische Mittelachse, insbesondere eine Zylindermittelachse des Einsatzelementes senkrecht auf der Erstreckungsebene der Verteilerplatte steht. So kann das Einsatzelement ohne Zugangsbohrungen einfach und frei zugänglich in die Verteilerplatte eingebracht werden, die schließlich auch nicht durch einen Stopfen oder dergleichen verschlossen werden müssen und durch die schließlich keine Schmelze strömt. Die Einsatzelemente sind damit folglich einfach zugänglich und austauschbar.

Die Erfindung richtet sich ferner auf eine Verteilereinheit eines Spritzgießwerkzeuges mit wenigstens einer Vorrichtung zur Rotation einer plastifizierten Schmelze im wenigstens einen Schmelzkanal zur Führung der plastifizierten Schmelze. Beispielsweise können in einer Verteilerplatte mit acht Heißkanaldüsen vier Vorrichtungen zur Rotation der plastifizierten Schmelze eingebracht sein, die jeweils zwischen zwei T-förmigen Verzweigungen in der Verteilerplatte eingerichtet sind.

Wird das Rotationsmittel zur Bildung der Vorrichtung beispielsweise nach einer ersten T-förmigen Verzweigung in den Schmelzkanal eingesetzt, so wird das Rotationsmittel mit der Schmelze mit einem Viskositätsprofil angeströmt, das bereits asymmetrisch ist. Die Asymmetrie bildet dabei eine bilaterale, d.h. zweiseitige Asymmetrie mit einer Lateralrichtung, die in der Ebene der Verteilerplatte selbst liegt. Weist der Verdrehwinkel zwischen der Trennrichtung und der Verbindungsrichtung im Einsatzelement beispielsweise 90° auf, so wird diese Asymmetrie der Viskositätsverteilung in der Schmelze ebenfalls um 90° gedreht, und die Asymmetrie steht in der Asymmetrie-Richtung senkrecht auf der Verteilerplatte und strömt mit diesem Profil der Viskositätsverteilung im weiteren Verlauf des Schmelzkanals weiter. Trifft diese Asymmetrie mit einer Asymmetrierichtung senkrecht auf der Verteilerplatte stehend auf die nachfolgende T-förmige Verzweigung, so strömen in die Verzweigungskanäle Teilströme der Schmelze mit wiederum zueinander gleichen Viskositätsprofilen ab. Dadurch ergibt sich der Vorteil einer zumindest im Wesentlichen gleichen Versorgung sämtlicher Heißkanaldüsen, ohne dass im Schmelzkanal ein nennenswerter Strömungswiderstand durch die Vorrichtung zur Rotation der plastifizierten Schmelze eingebracht wurde, und das Rotationsmittel, das im Wesentlichen auf dem Einsatzelement beruht und eine Wechselwirkung mit der Aufnahme in der Verteilerplatte aufweist, kann einfach aufgebaut und einfach austauschbar sein.

### BEVORZUGTES AUSFÜHRUNGSBEISPIEL DER ERFINDUNG

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Figur 1: eine perspektivische Ansicht einer Verteilereinheit mit einer Verteilerplatte aufweisend mehrere Vorrichtungen zur Rotation einer plastifizierten Schmelze im Schmelzkanal, ausgeführt mit den Merkmalen der Erfindung,
- Figur 2: eine Detailansicht der Verteilereinheit im Bereich von zwei Vorrichtungen zur Rotation der plastifizierten Schmelze nach der Anordnung einer Verzweigung im Schmelzkanal,
- Figur 3a: eine erste perspektivische Ansicht des Einsatzelementes und
- Figur 3b: eine zweite, zur ersten Ansicht gedrehte perspektivische Ansicht des Einsatzelementes.

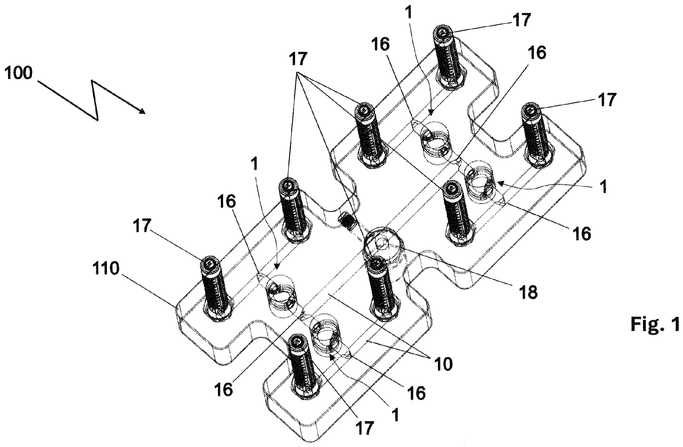

Figur 1 zeigt eine Gesamtansicht einer Verteilereinheit 100 mit einer Verteilerplatte 110, auf der acht Heißkanaldüsen 17 in einer zueinander symmetrischen Anordnung aufgebracht sind. Im geometrischen Mittelpunkt der Verteilerplatte 110 befindet sich ein Anschlussstück 18 zur Einbringung einer plastifizierten Schmelze, und in der Verteilerplatte 110 selbst ist ein mehrfach verzweigter Schmelzkanal 10 mit mehreren Abschnitten eingebracht, die ausgehend vom Anschlussstück 18 die plastifizierte Schmelze an jede der Heißkanaldüsen 17 führen kann. Wird über einen entsprechenden Extruderdruck die heiße, plastifizierte Schmelze über das Anschlussstück 18 in den Schmelzkanal 10 hineingepresst, so führt der Schmelzkanal 10 die Schmelze an jede der Heißkanaldüsen 17 heran, ober die dann die Schmelze in die Kavität bzw. das Nest zur Erzeugung des Spritzgussproduktes führt.

Zur Versorgung jeder der Heißkanaldüsen 17 weist der Schmelzkanal 10 mehrere Verzweigungen 16 auf. Eine erste Verzweigung 16 ergibt sich in symmetrischer Anordnung zueinander zwischen einem Ausgangsabschnitts des Schmelzkanals 10 zu jeweils zwei seitlich angeordneten Heißkanaldüsen 17 auf jeder Seite der Verteilerplatte 110, und eine jeweils folgende zweite Verzweigung 16 führt den Schmelzkanal 10 schließlich zur einzelnen Heißkanaldüse 17.

Im Bereich zwischen der ersten Verzweigung 16 und der zweiten Verzweigung 16 befinden sich jeweils Vorrichtungen 1 zur Rotation der plastifizierten Schmelze innerhalb der Verteilerplatte 110. Die Vorrichtungen 1 führen beispielsweise zu einer Rotation von 90° des Profils der Viskositätsverteilung der durch den Schmelzkanal 10 laufenden Schmelze mit einer entsprechenden Drehung der Verteilung der Viskosität. Die Viskositätsverteilung wird dem Beispiel gemäß im Wesentlichen um 90° gedreht, sodass die jeweiligen Heißkanaldüsen 17 mit der Schmelze umfassend ein Viskositätsprofil versorgt werden, das für jede der Heißkanaldüsen 17 gleich ausgestaltet ist.

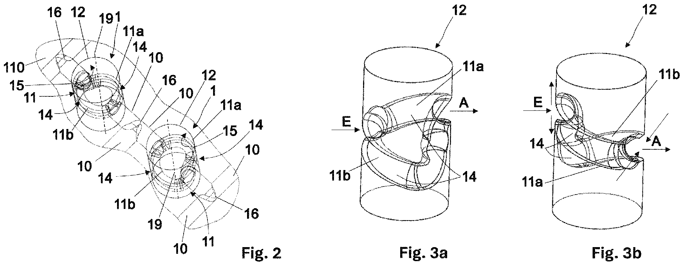

Figur 2 zeigt eine Detailansicht der Verteilerplatte 110 mit einem in dieser eingebrachten Schmelzkanal 10, wobei der Schmelzkanal 10 im Bereich einer Verzweigung 16 gezeigt ist, der schließlich mit den verzweigten Abschnitten des Schmelzkanals 10 die jeweilige Vorrichtung 1 anströmt, und im weiteren Verlauf führt der Schmelzkanal 10 zu einer weiteren Verzweigung 16, die den Schmelzkanal wieder in zwei Teilkanäle 10 aufteilt. So werden aus einem zulaufenden Schmelzkanal 10 in der gezeigten Ansicht vier abströmende Schmelzkanäle 10 zu den einzelnen nicht dargestellten Heißkanaldüsen.

Zwischen der ersten, mittigen Verzweigung 16 und den folgenden außenseitigen Verzweigungen 16 befinden sich die Vorrichtungen 1 umfassend ein Rotationsmittel 11 zur Rotation der Viskositätsverteilung in der Schmelze. Das Rotationsmittel 11 ist als Einsatzelement 12 ausgestaltet, und in einer Aufnahme in der Verteilerplatte 10 umfassend eine Innenwandung 15 eingesetzt. Das Einsatzelement 12 weist in der Grundstruktur einen Zylinderkörper auf, der passgenau in die Aufnahme in der Verteilerplatte 110 eingesetzt ist. Das Einsatzelement 12 erstreckt sich dabei im Wesentlichen um eine Zylindermittelachse 19, wobei das Einsatzelement 12 so in die Verteilerplatte 110 eingesetzt ist, dass die Zylindermittelachse 19 senkrecht bzw. orthogonal auf der Erstreckungsebene der Verteilerplatte 110 steht.

Im Außenumfang des zylinderförmigen Einsatzelementes 12 sind zwei Teilkanäle 11a und 11b als Nuten eingebracht, wobei die Nuten 14 zur Bildung der Teilkanäle 11a, 11b beginnend von einer Einlaufseite hin zu einer Auslaufseite für die Schmelze im Schmelzkanal 10 eine Helixform aufweisen, sodass einströmende Schmelze in der Verteilung des Viskositätsprofils der Schmelzfront um 90° gedreht wird.

Die Figuren 3a und 3b zeigen in verschiedenen Rotationspositionen das Einsatzelement 12, wobei in den Zylinderkörper auf dem Außenumfang Nuten 14 eingebracht sind, die die Teilkanäle 11a und 11b bilden. Die Teilkanäle beginnen an einer Einlaufseite E und enden an einer Auslaufseite A, und weisen eine zueinander helixartige Krümmung auf. So kann auf der Einlaufseite E in einer Trennrichtung, gezeigt mit zwei voneinander weg laufenden Pfeilen auf der Einlaufseite E, die Schmelze auseinanderlaufen, und nach Durchlauf durch die Teilkanäle 11a, 11b werden die beiden Teilströmungen aus den Teilkanälen 11a und 11b in einer Trennrichtung wieder zueinander geführt, um schließlich auf der Auslaufseite A in den weiteren Verlauf des Schmelzkanals zu gelangen. Die Verbindungsrichtung auf der Auslaufseite ist dabei 90° gedreht zur Trennrichtung auf der Einlaufseite ausgeführt, sodass sich auch das Viskositätsprofil in der strömenden Schmelze um 90° dreht. So kann eine Gleichverteilung der zugeführten Schmelze an die symmetrisch angeordneten Heißkanaldüsen in der Verteilereinheit erfolgen.

Die gezeigten Einsatzelemente 12 können beispielsweise aus einem Rundstahl hergestellt und die Nuten 14 können in die Außenumfangsfläche eingefräst werden. Auch ist es denkbar, dass das Einsatzelement 12 im 3D-Druckverfahren hergestellt wird, beispielsweise mittels eines selektiven Laserschmelzens (SLM). Insofern besteht die Möglichkeit, anstatt der Nuten auch innenliegende Teilkanäle 11a, 11b zu erzeugen.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktiver Einzelheiten oder räumlicher Anordnungen, können sowohl für sich als auch in den verschiedensten Kombinationen erfindungswesentlich sein.

### Bezugszeichenliste:

- 1: Vorrichtung

- 10: Schmelzkanal
- 11: Rotationsmittel
- 11a: Teilkanal
- 11b: Teilkanal
- 12: Einsatzelement
- 13: Außenumfangsfläche
- 14: Nut
- 15: Innenwandung
- 16: Verzweigung
- 17: Heißkanaldüse
- 18: Anschlussstück
- 19: Zylindermittelachse

- 100: Verteilereinheit
- 110: Verteilerplatte

- A: Auslaufseite
- E: Einlaufseite

## Patentansprüche

1. Vorrichtung (1) zur Rotation einer plastifizierten Schmelze in einer Verteilereinheit (100) eines Spritzgießwerkzeuges, wobei in der Verteilereinheit (100) wenigstens ein Schmelzkanal (10) zur Führung der plastifizierten Schmelze ausgebildet ist,
**dadurch gekennzeichnet,**
**dass** ein Rotationsmittel (11) im Schmelzkanal (10) eingerichtet ist, das zwei Teilkanäle (11a, 11b) aufweist, die sich getrennt voneinander zwischen einer Einlaufseite (E) und einer Auslaufseite (A) des Rotationsmittels (11) erstrecken, wobei die beiden Teilkanäle (11a, 11b) beginnend an der Einlaufseite (E) in einer Trennrichtung mit zunehmendem Abstand zueinander auseinanderlaufen und in der Auslaufseite (A) in einer Verbindungsrichtung unter einem Verdrehwinkel relativ zur Trennrichtung wieder aufeinander zu und zusammenlaufen.

2. Vorrichtung (1) nach Anspruch 1,
**dadurch gekennzeichnet,**
**dass** der Verdrehwinkel 70° bis 110°, vorzugsweise 80° bis 100° und besonders bevorzugt 90° beträgt.

3. Vorrichtung (1) nach Anspruch 1 oder 2,
**dadurch gekennzeichnet,**
**dass** die Verteilereinheit (100) eine Verteilerplatte (110) umfasst, in der der wenigstens eine Schmelzkanal (11) eingebracht ist und/oder wobei die Verteilerplatte (110) Teil des Rotationsmittels (11) ist.

4. Vorrichtung (1) nach einem der Ansprüche 1 bis 3,
**dadurch gekennzeichnet,**
**dass** das Rotationsmittel (11) ein Einsatzelement (12) umfasst, das in einer Aufnahme in der Verteilerplatte (110) eingebracht ist.

5. Vorrichtung (1) nach einem der vorgenannten Ansprüche,
**dadurch gekennzeichnet,**
**dass** das Einsatzelement (12) eine Außenumfangsfläche (13) aufweist, in die die zwei Teilkanäle (11a, 11b) als Nuten (14) eingebracht sind.

6. Vorrichtung (1) nach einem der vorgenannten Ansprüche,
**dadurch gekennzeichnet,**
**dass** das Einsatzelement (12) in der Aufnahme in der Verteilerplatte (110) eingepasst ist, sodass die Nuten (14) durch die Innenwandung (15) der Aufnahme in der Verteilerplatte (110) die Teilkanäle (11a, 11b) bilden.

7. Vorrichtung (1) nach einem der vorgenannten Ansprüche,
**dadurch gekennzeichnet,**
**dass** das Einsatzelement (12) einen Zylinderkörper bildet, und wobei die Aufnahme in der Verteilerplatte (110) eine Zylinderform aufweist, in die das Einsatzelement (12) eingepasst ist.

8. Vorrichtung (1) nach einem der vorgenannten Ansprüche,
**dadurch gekennzeichnet,**
**dass** die Einlaufseite (E) und die Auslaufseite (A) des Rotationsmittels (11) im Schmelzkanal (10) im Einsatzelement (12) eingebracht sind und einen Übergang der Teilkanäle (11a, 11b) aus dem und in den Schmelzkanal (10) bilden.

9. Vorrichtung (1) nach einem der vorgenannten Ansprüche,
**dadurch gekennzeichnet,**
**dass** das Einsatzelement (12) in die Aufnahme in der Verteilerplatte (110) eingeschraubt, eingepresst oder mit Haltemitteln haltend eingebracht ist und/oder dass wenigstens ein Dichtelement vorgesehen ist, das das Einsatzelement (12) in der Aufnahme in der Verteilerplatte (110) abdichtet.

10. Vorrichtung (1) nach einem der vorgenannten Ansprüche,
**dadurch gekennzeichnet,**
**dass** das Einsatzelement (12) so in die Aufnahme in der Verteilerplatte (110) eingebracht ist, dass eine Zylindermittelachse (19) des Einsatzelementes (12) senkrecht auf der Erstreckungsebene der Verteilerplatte (110) steht.

11. Vorrichtung (1) nach einem der vorgenannten Ansprüche,
**dadurch gekennzeichnet,**
**dass** wenigstens ein Rotationsmittel (11) im Schmelzkanal (10) zwischen zwei T-förmigen Verzweigungen (16) in der Verteilereinheit (100) eingebracht ist.

12. Verteilereinheit (100) eines Spritzgießwerkzeuges mit wenigstens einer Vorrichtung (1) zur Rotation einer plastifizierten Schmelze im wenigstens einen Schmelzkanal (10) zur Führung der plastifizierten Schmelze.

13. Verteilereinheit (100) nach Anspruch 12,
**dadurch gekennzeichnet,**
**dass** in einer Verteilerplatte (110) vier Vorrichtungen (1) zur Rotation einer plastifizierten Schmelze eingebracht sind, die jeweils zwischen zwei T-förmigen Verzweigungen (16) zur Versorgung von insgesamt acht Heißkanaldüsen (17) mit plastifizierter Schmelze eingerichtet sind.

## Geänderte Patentansprüche

### Geänderte Patentansprüche gemäss Regel 137(2) EPÜ.

1. Vorrichtung (1) zur Rotation einer plastifizierten Schmelze in einer Verteilereinheit (100) eines Spritzgießwerkzeuges, wobei in der Verteilereinheit (100) wenigstens ein Schmelzkanal (10) zur Führung der plastifizierten Schmelze ausgebildet ist,
**dadurch gekennzeichnet,**
**dass** ein Rotationsmittel (11) im Schmelzkanal (10) eingerichtet ist, das zwei Teilkanäle (11a, 11b) aufweist, die sich getrennt voneinander zwischen einer Einlaufseite (E) und einer Auslaufseite (A) des Rotationsmittels (11) erstrecken, wobei die beiden Teilkanäle (11a, 11b) beginnend an der Einlaufseite (E) in einer Trennrichtung mit zunehmendem Abstand zueinander auseinanderlaufen und in der Auslaufseite (A) in einer Verbindungsrichtung unter einem Verdrehwinkel relativ zur Trennrichtung wieder aufeinander zu und zusammenlaufen, sodass sich eine Rotation einer Viskositätsverteilung in der plastifizierten Schmelze um eine eigene Achse der plastifizierten Schmelze im Schmelzkanal (10) ergibt.

2. Vorrichtung (1) nach Anspruch 1,
**dadurch gekennzeichnet,**
**dass** der Verdrehwinkel 70° bis 110°, vorzugsweise 80° bis 100° und besonders bevorzugt 90° beträgt.

3. Vorrichtung (1) nach Anspruch 1 oder 2,
**dadurch gekennzeichnet,**
**dass** die Verteilereinheit (100) eine Verteilerplatte (110) umfasst, in der der wenigstens eine Schmelzkanal (11) eingebracht ist und/oder wobei die Verteilerplatte (110) Teil des Rotationsmittels (11) ist.

4. Vorrichtung (1) nach einem der Ansprüche 1 bis 3,
**dadurch gekennzeichnet,**
**dass** das Rotationsmittel (11) ein Einsatzelement (12) umfasst, das in einer Aufnahme in der Verteilerplatte (110) eingebracht ist.

5. Vorrichtung (1) nach einem der vorgenannten Ansprüche,
**dadurch gekennzeichnet,**
**dass** das Einsatzelement (12) eine Außenumfangsfläche (13) aufweist, in die die zwei Teilkanäle (11a, 11b) als Nuten (14) eingebracht sind.

6. Vorrichtung (1) nach einem der vorgenannten Ansprüche,
**dadurch gekennzeichnet,**
**dass** das Einsatzelement (12) in der Aufnahme in der Verteilerplatte (110) eingepasst ist, sodass die Nuten (14) durch die Innenwandung (15) der Aufnahme in der Verteilerplatte (110) die Teilkanäle (11a, 11b)bilden.

7. Vorrichtung (1) nach einem der vorgenannten Ansprüche,
**dadurch gekennzeichnet,**
**dass** das Einsatzelement (12) einen Zylinderkörper bildet, und wobei die Aufnahme in der Verteilerplatte (110) eine Zylinderform aufweist, in die das Einsatzelement (12) eingepasst ist.

8. Vorrichtung (1) nach einem der vorgenannten Ansprüche,
**dadurch gekennzeichnet,**
**dass** die Einlaufseite (E) und die Auslaufseite (A) des Rotationsmittels (11) im Schmelzkanal (10) im Einsatzelement (12) eingebracht sind und einen Übergang der Teilkanäle (11a, 11b) aus dem und in den Schmelzkanal (10) bilden.

9. Vorrichtung (1) nach einem der vorgenannten Ansprüche,
**dadurch gekennzeichnet,**
**dass** das Einsatzelement (12) in die Aufnahme in der Verteilerplatte (110) eingeschraubt, eingepresst oder mit Haltemitteln haltend eingebracht ist und/oder dass wenigstens ein Dichtelement vorgesehen ist, das das Einsatzelement (12) in der Aufnahme in der Verteilerplatte (110) abdichtet.

10. Vorrichtung (1) nach einem der vorgenannten Ansprüche,
**dadurch gekennzeichnet,**
**dass** das Einsatzelement (12) so in die Aufnahme in der Verteilerplatte (110) eingebracht ist, dass eine Zylindermittelachse (19) des Einsatzelementes (12) senkrecht auf der Erstreckungsebene der Verteilerplatte (110) steht.

11. Vorrichtung (1) nach einem der vorgenannten Ansprüche,
**dadurch gekennzeichnet,**
**dass** wenigstens ein Rotationsmittel (11) im Schmelzkanal (10) zwischen zwei T-förmigen Verzweigungen (16) in der Verteilereinheit (100) eingebracht ist.

12. Verteilereinheit (100) eines Spritzgießwerkzeuges mit wenigstens einer Vorrichtung (1) gemäß einem der Ansprüche 1 bis 11 zur Rotation einer plastifizierten Schmelze im wenigstens einen Schmelzkanal (10) zur Führung der plastifizierten Schmelze.

13. Verteilereinheit (100) nach Anspruch 12,
**dadurch gekennzeichnet,**
**dass** in einer Verteilerplatte (110) vier Vorrichtungen (1) zur Rotation einer plastifizierten Schmelze eingebracht sind, die jeweils zwischen zwei T-förmigen Verzweigungen (16) zur Versorgung von insgesamt acht Heißkanaldüsen (17) mit plastifizierter Schmelze eingerichtet sind.
